# EUROPÄISCHE PATENTSCHRIFT

(11) **EP 1 126 680 B1**
(45) Veröffentlichungstag und Bekanntmachung des Hinweises auf die Patenterteilung: **18.10.2006**
(21) Anmeldenummer: 00440279.8
(22) Anmeldetag: 18.10.2000
(51) Int. Cl.: H04L 29/06, H04M 3/42, H04L 12/66, H04Q 3/00

(54) **Verfahren, Konfigurationsserver, Signalisierungsserver und Computerprogramm zur Erzeugung von Dienstfunktionsmodulen**
Method, configuration server, signalling server and computer program for generating service function modules
Procédé, serveur de configuration, serveur de signalisation et programme informatique pour la génération de modules fonctionnels de service

(30) Priorität: 13.11.1999 DE 19954694
(43) Veröffentlichungstag der Anmeldung: 22.08.2001
(73) Patentinhaber: ALCATEL, 75008 Paris (FR)
(72) Erfinder: Kaiser, Bernhard, Dr., 71665 Vaihingen (DE)
(74) Vertreter: Brose, Gerhard

(56) Entgegenhaltungen:
- EP-A- 0 847 176
- WO-A-98/28885
- DE-A- 19 810 869

## Beschreibung

Die vorliegende Erfindung betrifft ein Verfahren zur Erzeugung von Dienstfunktionsmodulen gemäß dem Oberbegriff des Anspruchs 1, sowie einen Konfigurationsserver gemäß dem Oberbegriff des Anspruchs 8, einen Signalisierungsserver gemäß dem Oberbegriff des Anspruchs 9 und ein Computerprogramm gemäß dem Oberbegriff des Anspruchs 10.

Die Erfindung geht aus von der Erbringung von Telekommunikationsdienstfunktionen in einem Paketdatennetzwerk, insbesondere im Internet, wobei über das Paketdatennetzwerk Multimedia-Kommunikationsbeziehungen zwischen Endteilnehmern aufgebaut werden. Unter Multimedia-Kommunikationsbeziehungen werden in einfachen Fällen reine Sprachverbindungen oder reine Bildverbindungen verstanden, in komplizierteren Fällen auch Kombinationen aus Sprache und Bild sowie eventuell zusätzlichen Daten, z.B. Computerdateien etc.. Reine Sprachverbindungen über Internet werden auch als "Voice over Internet Protocol"-Verbindungen (VoIP) bezeichnet.

Aus der WO 98/28885 ist eine Vorrichtung bekannt, die zwischen einer an das Internet angeschlossenen Einheit und einem Knoten eines intelligenten Netzes angeordnet ist. Diese Vorrichtung konvertiert ein vom Knoten des intelligenten Netzes kommendes Signal in ein Signal, das kompatibel ist mit der an das Internet angeschlossenen Einheit und umgekehrt.

Die EP 0 847 176 A2 beschreibt den Abruf von Diensten durch einen Teilnehmer von einem öffentlichen Telefonnetz über parallele Datennetze. Dadurch wird es einem Teilnehmer oder sonstigen Nutzer des öffentlichen Telefonnetzes ermöglicht, spezielle Dienste, die das Telefonnetz anbietet, einzurichten, zu löschen oder zu ändern.

Die DE 198 10 869 A1 beschreibt ein Verfahren, einen Server und eine Vermittlungsstelle zur verwaltung von Telekommunikationsdienst-Daten eines Teilnehmers. Dies erfolgt über ein Datenendgerät des Teilnehmers mittels einer Verbindung über ein On-Line-Datennetzwerk zu der Vermittlungsstelle.

Die ITU-T Recommendation H.323, Ausgabe 2/98 definiert eine mögliche Infrastruktur für audiovisuelle und multimediale Verbindungen über paketorientierte Netzwerke, im folgenden nur als multimediale Verbindungen bezeichnet. Eine solche Infrastruktur wird unter anderem auch für "Voice over Internet Protocol"-Verbindungen benötigt. Alternativen zu einer Infrastruktur nach der ITU-T Recommendation H.323 werden beispielsweise innerhalb der IETF (Internet Engineering Task Force) diskutiert. Die ein-zelnen Komponenten einer Infrastruktur zum Aufbau von audiovisuellen und multimedialen Verbindungen sind, jeweils in der Terminologie der ITU-T Recommendation H.323: Terminals, Gateways sowie Gatekeeper, auch Call Server genannt. Terminals ermöglichen den Zugang zu einem Paketdatennetzwerk und enthalten als Herzstück einen Sprachcodec, mit dem Sprachsignale in digitale Datenpakete codiert und digitale Datenpakete in Sprachsignale decodiert werden. Weitere Codecs, beispielsweise Videocodecs für Bildsignale, können in einem Terminal ebenfalls enthalten sein.

Wenn in einem ersten Terminal die Internet-Adresse eines zweiten Terminals bekannt ist, kann das erste Terminal eine multimediale Verbindung zu diesem Terminal mit Hilfe dieser Internet-Adresse direkt aufbauen. Üblicherweise jedoch werden Internet-Adressen für Terminals nicht fest zugeordnet, sondern pro Internet-Sitzung neu vergeben, so dass zum Aufbau einer multimedialen Verbindung weitere Komponenten eingesetzt werden. Dies sind für Aufbau und Unterhalt von Verbindungen innerhalb eines Paketdatennetzwerkes die genannten Gatekeeper und für Verbindungen zu leitungsvermittelten Telekommunikationsnetzen die sogenannten Gateways. Die Gateways erbringen eine Schnittstellenfunktion zwischen einem Paketdatennetzwerk und einem leitungsvermittelten Telekommunikationsnetz, z.B. einem ISDN (Integrated Services Digital Network). Auf Seiten des leitungsvermittelten Telekommunikationsnetzes kommuniziert der Gateway z.B. mit Hilfe des CCITT Signalisierungssystems Nr. 7, auf Seiten des Paketdatennetzwerkes mit Hilfe einer Signalisierung gemäss der ITU-T Recommendation H.225, in der beispielsweise Aufbau und Auslösung einer Verbindung innerhalb eines Paketdatennetzwerkes beschrieben sind. Weiterhin konvertiert ein Gateway in den jeweiligen Netzwerken unterschiedliche Audio- Video und Datenformate, sofern dies notwendig ist.

Innerhalb eines Paketdatennetzwerkes stellen Gatekeeper den angeschlossenen Terminals Dienste für Verbindungsaufbau und Verbindungsabbau sowie für Verbindungssteuerung zur Verfügung. Wie bereits erwähnt, können Terminals einerseits direkt, ohne einen Gatekeeper, miteinander kommunizieren. Andererseits können Terminals in vorteilhafter Weise durch ein Gatekeeper unterstützt werden, beispielsweise beim Verbindungsaufbau. Dann meldet z.B. ein Terminal bei dem Gatekeeper einen Verbindungswunsch zu einem Kommunikationspartner-Terminal an. Anschließend ermittelt der Gatekeeper die notwendige Adresse des Kommunikationspartner-Terminals und baut mit Hilfe der in dem Paketdatennetzwerk üblichen Signalisierung, z.B. einer Signalisierung gemäss der ITU-T Recommendation H.225, die gewünschte Verbindung bis zu dem Kommunikationspartner-Terminal vollends auf.

Ein Gatekeeper oder ein Gateway können darüber hinaus weitere Funktionen erbringen, z.B. Dienst-Funktionen ähnlich den Service-Switching Funktionen oder den Service-Control Funktionen innerhalb eines sogenannten Intelligenten Netzes (IN = Intelligent Network, siehe beispielsweise ITU-T Recommendation Q.1215), das auf einem leitungsvermittelten Telekommunikationsnetz basiert. Ein typisches Beispiel für solche Dienst-Funktionen eines Intelligenten Netzes ist der sogenannte "Rückruf-bei-Besetzt" Dienst (Call Completion on Busy Subscriber = CCBS). Dieser Dienst kann aktiviert werden, wenn ein gerufener Teilnehmer besetzt ist. Wird der Dienst vom rufenden Teilnehmer aktiviert, so sendet eine Dienstelogik in der Vermittlungsstelle des gerufenen Teilnehmers der Vermittlungsstelle des rufenden Teilnehmer eine Dienst-Signalisierungsnachricht zu, wenn der gerufene Teilnehmer nicht mehr besetzt ist.

Dienst-Funktionen auf der Basis von Signalisierungsnachrichten können nicht nur in einem leitungsvermittelten Telekommunikationsnetz, sondern auch für ein Paketdatennetzwerk bereitgestellt werden. Dazu können in einer ersten Ausführungsform von dem Paketdatennetzwerk aus Diensterbringungseinrichtungen eines leitungsvermittelten Telekommunikationsnetzes adressiert werden. In einer weiteren Ausführungsform werden solche Dienste jedoch direkt durch Server eines Paketdatennetzwerkes erbracht, z.B. durch Gateways oder durch Gatekeeper. Die Einrichtung der dazu erforderlichen Dienstelogiken, also der Prozeduren zum Senden und Empfangen von Dienst-Signalisierungsnachrichten in den jeweiligen Servern ist jedoch kompliziert und fehlerträchtig, da die Prozeduren zunächst in einer Programmiersprache kodiert und dann zu von den Servern ausführbaren Maschinenbefehlen kompiliert werden müssen.

Obwohl die vorliegende Erfindung, wie schon einleitend gesagt, von Problemen in Bezug auf ein Paketdatennetzwerk, insbesondere in Bezug auf das Internet ausgeht, ist die Lösung nicht hierauf beschränkt. Allerdings sind die genannten Probleme in herkömmlichen Kommunikationsnetzen weniger von Bedeutung, weil dort mittels des Intelligenten Netzes bereits Lösungen vorliegen. Diese können allerdings wegen der andersartigen Signalisierung nur bedingt auf Paketdatennetzwerke übertragen werden. Die im folgenden vorgestellte, an sich für das Internet gesuch te Lösung ist aber auch für andere, herkömmliche, Kommunikationsnetze anwendbar.

Aufgabe der Erfindung ist es daher, Verfahren und Einrichtungen zu schaffen, mit denen Dienstfunktionsmodule zur Erbringung von Dienstfunktionen für ein Kommunikationsnetz sicher und bequem erstellt werden können.

Diese Aufgabe wird durch ein Verfahren gemäß der technischen Lehre des Anspruchs 1, sowie einen Konfigurationsserver gemäß der technischen Lehre des Anspruchs 8, einen Signalisierungsserver gemäß der technischen Lehre des Anspruchs 9 und ein Computerprogramm gemäß der technischen Lehre des Anspruchs 10 gelöst.

Der Erfindung liegt hierbei der Gedanke zugrunde, dass auf einem Konfigurationsserver vorgefertigte Prozedurmodule in Form von durch einen Signalisierungsserver ausführbaren Programmcodesequenzen bereitgestellt werden, die zum Senden, Verarbeiten oder Empfangen von Dienst-Signalisierungsnachrichten durch den Signalisierungsserver geeignet sind, um Multimedia-Kommunikationsbeziehungen über ein Paketdatennetzwerk zu steuern. Der Signalisierungsserver kann z.B. einer der eingangs erwähnten Gateways oder Gatekeeper, auch Call Server genannt, sein. Die Dienst-Signalisierungsnachrichten dienen zum Erbringen von Diensten für die eingangs erwähnten Terminals. Der Konfigurationsserver kann ein separates Rechnersystem oder in den Signalisierungsserver integriert sein. Die Prozedurmodule werden in Form von Symbolen, auch Icons genannt, auf einer graphischen Bedienoberfläche des Konfigurationsservers dargestellt und können so bequem durch einen Bediener, z.B. mit Hilfe einer Computermaus, manipuliert werden. Der Bediener kann Symbole auswählen und in einer Weise anordnen, die einem durch den Bediener gewünschten Ablauf einer zu erstellenden Dienstelogik entsprechen. Unter Ablauf ist hier insbesondere das Senden und Empfangen von vorbestimmten Dienst-Signalisierungsnachrichten in einer der Dienstelogik entsprechenden Sequenz zu verstehen. Der Konfigurationsserver erfasst dann die von dem Bediener ausgewählten und angeordneten Symbole auf der Bedienoberfläche und stellt in Analogie zu dieser Anordnung aus den jeweils zu den ausgewählten Symbolen gehörenden Prozedurmodulen ein Dienstfunktionsmodul zusammen, das der Konfigurationsserver dann zum Laden in den Signalisierungsserver bereitstellt. Nach Laden des Dienstfunktionsmoduls kann der Signalisierungsserver dann den durch den Bediener definierten Dienst erbringen, insbesondere Dienst-Signalisierungsnachrichten in der somit definierten Weise senden und empfangen und damit einen durch den Bediener konfigurierten Dienst erbringen.

In einer vorteilhaften Weiterbildung der Erfindung erzeugt der Konfigurationsserver weiterhin ein Schnittstellenmodul, das Parameterdaten für das Dienstfunktionsmodul erfassen kann. Ein solches Schnittstellenmodul wird beispielsweise in einen Netzwerk-Management Server geladen und ermöglicht, den erfindungsgemäss konfigurierten Dienst z.B. an lokale, kundenspezifische oder zeitliche Bedingungen anzupassen oder schlicht zu aktivieren oder zu deaktivieren. Das Schnittstellenmodul kann auch direkt auf dem Signalisierungsserver oder auf einem an den Signalisierungsserver anschliessbaren Personal Computer betrieben werden. Neben der eingangs erläuterten Struktur eines Paketdatennetzwerks nach der ITU-T Recommendation H.323 und der dort üblichen Signalisierung kann die Erfindung auch auf eine Signalisierung gemäss der innerhalb der IETF (Internet Engineering Task Force) diskutierten Signalisierungsprotokolle SIP sowie MGCP (SIP = Session Initiation Protocol, MGCP = Media Gateway Control Protocol) und deren jeweils zugrundeliegenden Infrastrukturen angewandt werden. Eine Anwendung der Erfindung auf weitere, noch zu entwickelnde Signalisierungsprotokolle oder Paketdatennetzwerkstrukturen ist ohne weiteres möglich.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt eine sehr schematische Anordnung zur Ausführung der Erfindung.
- Figur 2: zeigt einen erfindungsgemäßen Konfigurationsserver (SER) zur Ausführung des erfindungsgemäßen Verfahrens. Der Konfigurationsserver weist auch ein erfindungsgemäßes Speichermedium auf, in dem ein erfindungsgemäßes Computerprogramm abgespeichert ist.
- Figur 3: zeigt den Einsatz eines erfindungsgemäßen Konfigurationsservers in einem Intelligenten Netz

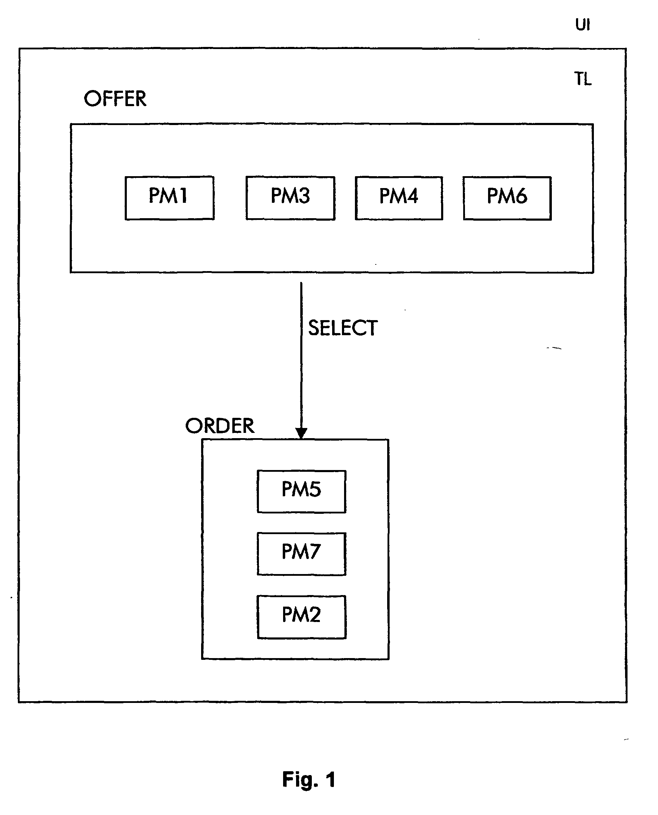

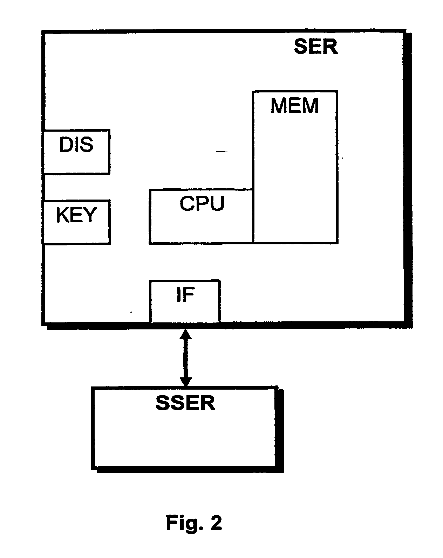

In Figur 1 ist eine sehr schematische Anordnung zur Ausführung der Erfindung gezeigt. Auf einer graphischen Bedienoberfläche UI, die auf einem erfindungsgemässen Konfigurationsserver SER betrieben wird, der anhand von Figur 2 näher erläutert wird, sind die Prozedurmodule PM1, PM2, PM3, PM4, PM5, PM6 und PM7 in Form von Symbolen, auch Icons genannt, dargestellt. Jedes dieser Symbole repräsentiert also ein Prozedurmodul zum Erfassen, Verarbeiten und Bilden von Signalisierungstelegrammen eines Paketdatennetzwerkes durch einen Signalisierungsserver. Weiterhin zeigt Figur 1 zwei Felder OFFER und ORDER, auf die die Prozedurmodule verteilt sind. Im Feld OFFER sind die Prozedurmodule PM1, PM3, PM4 und PM6 dargestellt. Diese Prozedurmodule werden durch den Konfigurationsserver SER auf der graphischen Bedienoberfläche UI zur Auswahl angeboten und können durch einen Bediener z.B. mit Hilfe einer Computermaus durch eine sogenannte "drag and drop"-Operation, in Figur 1 durch einen Pfeil SELECT dargestellt, manipuliert werden. Der Bediener kann somit Symbole von Prozedurmodulen aus dem Feld OFFER in das Feld ORDER "ziehen" und dort in der gewünschten Weise anordnen. Die Prozedurmodule PM5, PM7 und PM2 wurden auf diese Weise durch einen Bediener ausgewählt und angeordnet. Der Konfigurationsserver SER erfasst dann diese Anordnung von Symbolen und stellt in Analogie dazu die zugehörigen Prozedurmodule zusammen, fasst diese also zu einem Dienstfunktionsmodul zusammen, dessen einzelne Bestandteile wie in dem Feld ORDER angezeigt miteinander wirken. In dem nach Figur 1 erstellten Dienstfunktionsmodul erfasst das Prozedurmodul PM5 beispielsweise eine Dienst-Signalisierungsnachricht. Das Prozedurmodul PM7 verarbeitet dann die Inhalte der Dienst-Signalisierungsnachricht, indem sie diese Inhalte in eine Datenbank einträgt und einen dazu korrelierenden Inhalt aus der Datenbank ausliest. Abschließend bildet das Prozedurmodul PM2 aus dem aus der Datenbank ausgelesenen Inhalt eine weitere Dienst-Signalisierungsnachricht.

Selbstverständlich kann dabei die Möglichkeit vorgesehen werden, bei einer "drag and drop"-Operation ein Prozedurmodul nur als Kopie in das Feld ORDER zu ziehen und gleichzeitig ein weiteres Exemplar im Feld OFFER zu belassen.

Dieser graphischen Bedienoberfläche UI liegt ein Computerprogramm zugrunde, mit dem erfindungsgemäss ein Dienstfunktionsmodul erzeugt werden kann und das hier als Erzeugungsmodul TL bezeichnet wird und das als ein erfindungsgemäßes Computerprogramm anzusehen ist.

Ein Computer zur Ausführung dieses Erzeugungsmoduls TL ist in einigen wesentlichen Komponenten in Figur 2 als Konfigurationsserver SER dargestellt. Der Konfigurationsserver SER kann z.B. Teil eines Netzwerk-Management-Systems sein oder ein separater Computer, der ein durch ihn erzeugtes Dienstfunktionsmodul in einen Call Server laden kann. Der Konfigurationsserver SER enthält ein Steuermittel CPU, z.B. einen Prozessor, zur Ausführung maschinenlesbarer Befehle, z.B. und hier besonders zur Ausführung des Erzeugungsmoduls TL. Ferner weist der Konfigurationsserver SER einen Speicher MEM auf, in dem das Erzeugungsmodul TL gespeichert sein kann. Außerdem verfügt der Konfigurationsserver SER als Eingabemittel über ein Tastenfeld KEY und eine nicht getrennt eingezeichnete Computermaus, um während der Ausführung des Erzeugungsmoduls TL Daten an dieses zu senden und als Ausgabemittel über eine Anzeigevorrichtung DIS, z.B. um Daten auszugeben, die während der Ausführung des Erzeugungsmoduls TL von diesem erzeugt wurden. Ferner verfügt der Konfigurationsserver SER über eine Schnittstellenvorrichtung IF, über die der Konfigurationsserver SER ein Dienstfunktionsmodul an einen Signalisierungsserver SSER bereitstellen kann. Die Komponenten des Servers SER sind durch in Figur 2 nicht dargestellte Verbindungen miteinander verbunden. Ein Betriebssystem, z.B. UNIX oder DOS (Disc Operating System), verwaltet die Betriebsmittel des Servers SER und steuert unter anderem die Ausführung des Erzeugungsmoduls TL.

Ein erfindungsgemäßer Signalisierungsserver unterscheidet sich von einem erfindungsgemäßen Konfigurationsserver dadurch, dass in einem erfindungsgemäßen Signalisierungsserver die Funktionen eines herkömmlichen Signalisierungsservers mit denen eines erfindungsgemäßen Konfigurationsservers kombiniert sind.

Nach Abschluß der Erzeugung eines neuen Dienstfunktionsmoduls wird dieses im Konfigurationsserver bereitgestellt, um dann von einem vom Konfigurationsserver getrennten oder auch von einem mit diesem vereinigten Signalisierungsserver verwendet werden zu können. Hierzu muß selbstverständlich das erzeugte Dienstfunktionsmodul in den Signalisierungsserver geladen oder, wenn der Signalisierungsserver gleichzeitig auch Konfigurationsserver ist, dort aktiviert werden. Hier kommt jedoch kein erfindungsspezifischer Gedanke zum Tragen.

Ein zu erbringender und deshalb durch den Konfigurationsserver durch Erzeugung eines Dienstfunktionsmoduls bereitzustellender Dienst muß in der Regel, wie schon erwähnt, an lokale, kundenspezifische oder zeitliche Bedingungen angepasst oder auch schlicht aktiviert oder deaktiviert werden können. Hierzu sind dann durch das Netzwerk-Management verschiedene Parameter vorzugeben. Für diesen Fall ist, in Fortbildung der Erfindung, vorgesehen, daß im Zusammenhang mit der Erzeugung eines Dienstfunktionsmoduls auch ein Schnittstellenmodul erzeugt wird, mittels dessen dann das Dienstfunktionsmodul konfiguriert werden kann. Dieses Schnittstellenmodul hat dann die Aufgabe, nachdem es in einen Netzwerk-Management-Server geladen ist, zunächst einen Operator aufzufordern, die für den neu erzeugten Dienst erforderlichen Parameter einzugeben. Weiter hat dieses Schnittstellenmodul dann die Aufgabe, diese Parameter an denjenigen oder an diejenigen Signalisierungsserver zu übermitteln, durch den bzw. die der Dienst dann zu erbringen ist.

Zu den im Einzelfall noch zu bestimmenden Eigenschaften gehört die Angabe der jeweils zu verwendenden Protokolle. Abgesehen davon, daß möglicherweise eine "Mehrsprachigkeit" oder eine Selbstadaption vorgesehen sein kann, ist einerseits eine unveränderliche feste Vorgabe und andererseits eine völlig freie Veränderbarkeit über einzugebende Parameter denkbar.

Auch bei einer unveränderlichen festen Vorgabe kann die Verwendung verschiedener Protokolle für zu sendende und zu empfangende Signalisierungstelegramme vorkommen.

Beispielsweise kann ein erstes im Dienstfunktionsmodul enthaltenes Prozedurmodul für die Zusammenarbeit mit dem öffentlichen Netz und hierfür für die Verwendung von Signalisierungstelegrammen nach der ITU-T-Recommendation H.323 vorgesehen sein, während ein anderes Prozedurmodul für die Zusammenarbeit mit dem Internet und hierfür für die Verwendung von SIP-Signalisierungstelegrammen oder von MGCP-Signalisierungstelegrammen vorgesehen sein.

Sowohl für ein zusammen mit einem Dienstfunktionsmodul zu erzeugendes Schnittstellenmodul als auch für die bezüglich der Protokolle möglicherweise verschiedenen Variationen ist es zunächst denkbar, hierfür von vornherein weitere Prozedurmodule bereitzustellen und diese dann auch durch unterschiedliche Symbole auf der Bedienoberfläche im Bereich OFFER anzubieten.

In der Regel wird aber für ein bestimmtes Prozedurmodul ein ganz bestimmter Satz von Parametern in Frage kommen, der unabhängig davon ist, wie gerade dieses Prozedurmodul mit anderen Prozeduren zu einem Dienstfunktionsmodul zusammengestellt wird. Dann kann jedem "Dienstfunktionsmodul-Prozedurmodul" ein "Schnittstellenmodul-Prozedurmodul" zugeordnet werden und es können dann jeweils beide einander zugeordneten Prozedurmodule unter einem gemeinsamen Symbol auf der Bedienoberfläche UI zusammengefaßt werden. Im Zusammenhang mit der Kompilierung der "Dienstfunktionsmodul-Prozedurmodule" zu einem Dienstfunktionsmodul kann dann auch die Kompilierung der "Schnittstellenmodul-Prozedurmodule" zu einem Schnittstellenmodul erfolgen. Inwieweit dies dann zwangsläufig oder auf Befehl (z.B. mittels einer Schaltfläche auf der Bedienoberfläche UI) erfolgt, ist unerheblich.

Grundsätzlich ist es auch noch denkbar, daß die verschiedenen Prozedurmodule im Hinblick auf den neu zu erstellenden Dienst noch weiter angepaßt werden können. Hierfür ist es denkbar, beispielsweise nach Doppelklick auf das zugehörige Symbol, noch weitere Eingabemöglichkeiten vorzusehen.

Sinnvollerweise sollte ein erfindungsgemäßer Konfigurationsserver auch die Möglichkeit zur Erstellung von neuen oder Änderung von bestehenden Prozedurmodulen bieten, um sowohl neue Dienste als auch die Zusammenarbeit mit neuartigen Netzkomponenten anbieten zu können. Ein hierfür erforderlicher Editor ist aber grundsätzlich nichts Neues.

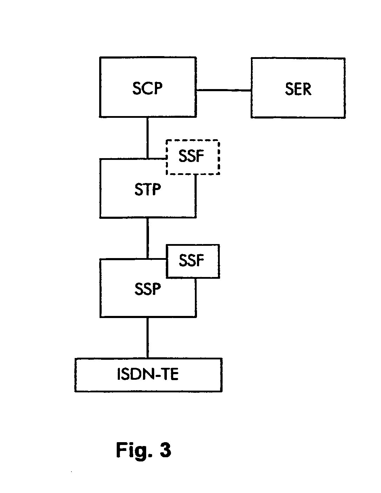

Abschließend soll noch anhand der Figur 3 der Einsatz eines erfindungsgemäßen Konfigurationsservers kurz beschrieben werden. Wie bereits oben erwähnt, wurde die vorliegende Lösung für den Einsatz im Internet entwickelt. Sie wird aber im folgenden im Einsatz in einem Intelligenten Netz beschrieben, um auch diesen möglichen Einsatz darzulegen. Es ist jedoch ohne weiteres klar, daß anstelle des Dienststeuerungsrechners SCP des Intelligenten Netzes ein Signalisierungsserver des Internet vorliegen könnte. Die zu erbringenden Dienstfunktionen sind hier als Funktionen des Intelligenten Netzes bezeichnet. Es ist auch ohne weiteres ersichtlich, daß dann, wenn anstelle des Dienststeuerungsrechners SCP des Intelligenten Netzes ein Signalisierungsserver des Internet vorliegt, von diesem aus sowohl direkt Dienste für das Internet konfiguriert werden können als auch über Gateways ein Dienststeuerungsrechners SCP des Intelligenten Netzes adressiert werden kann, um dort Dienste zu konfigurieren.

Figur 3 zeigt übereinander ein Teilnehmerendgerät ISDN-TE, eine Vermittlungsstelle SSP, einen Signalisiernetzknoten STP und einen Dienststeuerungsrechner SCP. Sie sind in dieser Reihenfolge auch miteinander verbunden. Neben dem Dienststeuerungsrechner SCP, der in der vorliegenden Beschreibung auch als Signalisierungsserver bezeichnet wird, ist ein erfindungsgemäßer Konfigurationsserver SER dargestellt. Dienststeuerungsrechner SCP und Konfigurationsserver SER können auch als erfindungsgemäßer Signalisierungsserver zusammengefaßt sein.

Der Vermittlungsstelle SSP und dem Signalisiernetzknoten STP sind hier noch Schnittstelleneinheiten mit Dienstvermittlungsfunktion SSF zugeordnet.

Das Teilnehmerendgerät ISDN-TE ist hier beispielhaft als Teilnehmereinrichtung nach dem ISDN-Standard bezeichnet. Grundsätzlich kann jedes beliebige Teilnehmerendgerät, egal ob analog oder digital, egal ob für Sprache oder für Daten oder auch für beides, Funktionen des Intelligenten Netzes auslösen.

Die Vermittlungsstelle SSP ist hier als Vermittlungsstelle gekennzeichnet, die einen Dienstaufruf des Intelligenten Netzes erkennen kann, d.h., als sogenannter Service Switching Point SSP. Teilnehmerendgeräte, die nicht direkt an einer als SSP ausgebildeten Vermittlungsstelle angeschlossen sind, müssen zunächst auf normalem Weg zu einer solchen Vermittlungsstelle vermittelt werden.

Die in der Vermittlungsstelle SSP integrierte Dienstvermittlungsfunktion SSF erkennt IN-Rufe und leitet die Anfragen an den SCP weiter. Der Aufruf einer IN-Funktion ist an vordefinierte Trigger gekoppelt. Abgesehen von bestimmten Rufnummern, die einen Trigger-Punkt darstellen, werden beispielsweise auch bestimmte Zustände der Verbindung, wie besetzter Teilnehmer, oder unter Umständen bereits das Abheben des Handapparats, als Trigger-Punkt interpretiert. Die weiteren Aktionen können dann bereits vom IN bewertet werden.

Der Signalisiernetzknoten STP ist gleichzeitig Service Transfer Point STP des Intelligenten Netzes und sogenannter Signalling Transfer Point STP des bekannten Signalisierungsnetzes SS7. Zumindest als letzterer ist er allgemein bekannt; er übernimmt im Signalisierungsnetz die Funktion einer Vermittlung und eines Konzentrators.

Zwischen SSP und SCP wird das Zeichengabeverfahren Nr.7 (SS7) benutzt, wobei zwischen SSP und STP das auf SS7 basierende ISUP-Protokoll (ISUP = ISDN User Part) und zwischen STP und SCP das ebenfalls auf SS7 basierende INAP-Protokoll (INAP = Intelligent Network Application Part) verwendet wird.

Der Dienststeuerungsrechner (Service Control Point) SCP steuert in Echtzeit die Anfragen der SSPs und damit letztlich die IN-Funktionen. Solche Service Control Points SCP sind allgemein bekannt und als solche nicht von der vorliegenden Erfindung erfaßt. Daß solche SCPs die an sie gestellten Aufgaben in Zusammenarbeit nicht nur mit den STPs, den SSPs und den Teilnehmerendgeräten, sondern auch mit Konfigurations-Datenbanken SMP (SMP = Service Management Point) oder auch noch mit weiteren Netzelementen erfüllen, ist ebenso bekannt und allenfalls insoweit von der vorliegenden Erfindung betroffen, als auch diese wieder solche weiteren Netzelemente beschreibt.

Auch bezüglich der Schnittstelleneinheiten mit Dienstvermittlungsfunktion SSF wird hier unterstellt, daß sie allgemein bekannt oder doch wenigstens ohne weiteres für den Fachmann verständlich sind. Die dem SSP angegliederte Schnittstelleneinheit SSF wirkt gegenüber der Nutzsignal-Netzübergangseinrichtung TG genauso wie der SSP selbst gegenüber einer angeschlossenen Vermittlungsstelle ohne die Funktion einer SSP. Die dem STP angegliederte Schnittstelleneinheit SSF wirkt gegenüber der Signalisierungs-Netzübergangseinrichtung SG genau so wie der STP selbst gegenüber einer weiteren SSP.

Dem Dienststeuerungsrechner SCP, der in der vorliegenden Beschreibung auch als Signalisierungsserver bezeichnet wird, ist ein erfindungsgemäßer Konfigurationsserver SER zugeordnet. Dienststeuerungsrechner SCP und Konfigurationsserver SER können, wie schon gesagt, auch als erfindungsgemäßer Signalisierungsserver zusammengefaßt sein.

Gerade im letztgenannten Beispiel, wo der erfindungsgemäße Konfigurationsserver nicht im Zusammenhang mit einem Paketdatennetzwerk, sondern direkt an einem Intelligenten Netz eingesetzt wird, ist darauf hinzuweisen, daß die beschriebenen Strukturen in der Praxis häufig Übergänge aufweisen. So nimmt in der Praxis oft der SSP oder auch der STP Funktionen des SCP wahr. Der erfindungsgemäße Konfigurationsserver ist in einem solchen Fall deshalb nicht am SCP, sondern am SSP oder am STP anzuschalten. Gerade hier zeigt sich der Vorteil eines erfindungsgemäßen Konfigurationsservers auch im Einsatz in einem herkömmlichen Kommunikationsnetz. Auch wenn dabei die in Figur 3 gezeigte Struktur physikalisch nicht gegeben ist, so liegt sie doch jedenfalls als logische Struktur noch vor.

Durch diesen erfindungsgemäßen Konfigurationsserver können auf diese Weise sehr einfach neue vom Dienststeuerungsrechner SCP zu erbringende Dienste konfiguriert und in den Dienststeuerungsrechner eingebracht werden.

## Patentansprüche

1. Verfahren zur Erzeugung von Dienstfunktionsmodulen für einen Signalisierungsserver (SSER), der Signalisierungsfunktionen zur Steuerung von Kommunikationsbeziehungen über ein Kommunikationsnetz erbringen kann, **gekennzeichnet durch die Schritte:**
- Bereitstellen von Prozedurmodulen (PM1, ..., PM7) zum Erfassen, Verarbeiten und Bilden von Signalisierungstelegrammen eines Kommunikationsnetzes **durch** einen Konfigurationsserver (SER),
- Darstellen der Prozedurmodule (PM1 ..., PM7) in Form von Symbolen **durch** eine Bedienoberfläche (UI) auf dem Konfigurationsserver (SER),
- Erfassen einer **durch** einen Bediener vorgegebenen Auswahl und Anordnung der Symbole der Prozedurmodule (PM1, ..., PM7) auf der Bedienoberfläche (UI),
- Zusammenstellen der Prozedurmodule (PM1, ..., PM7) zu einem Dienstfunktionsmodul in einer **durch** die Auswahl und die Anordnung der jeweiligen Symbole der Prozedurmodule (PM1, ..., PM7) auf der Bedienoberfläche(UI) vorgegebenen Weise **durch** den Konfigurationsserver (SER) und
- Bereitstellen des Dienstfunktionsmoduls **durch** den Konfigurationsserver (SER) für den Signalisierungsserver (SSER).

2. Verfahren nach Anspruch 1, **dadurch gekennzeichnet, dass** das Dienstfunktionsmodul in den Signalisierungsserver (SSER) geladen wird.

3. Verfahren nach Anspruch 1, **dadurch gekennzeichnet, dass** durch den Konfigurationsserver (SER) ein Schnittstellenmodul zur Eingabe von Parameterdaten für das Dienstfunktionsmodul erzeugt wird.

4. Verfahren nach Anspruch 3, **dadurch gekennzeichnet, dass** das Schnittstellenmodul zur Eingabe von Parameterdaten für das Dienstfunktionsmodul in einen Netzwerk-Management-Server geladen wird.

5. Verfahren nach Anspruch 1, **dadurch gekennzeichnet, dass** das Dienstfunktionsmodul in dem Signalisierungsserver (SSER) ausgeführt wird und dass das Dienstfunktionsmodul Signalisierungstelegramme nach der ITU-T-Recommendation H.323 sendet und empfängt.

6. Verfahren nach Anspruch 1, **dadurch gekennzeichnet, dass** das Dienstfunktionsmodul in dem Signalisierungsserver (SSER) ausgeführt wird und dass das Dienstfunktionsmodul SIPSignalisierungstelegramme sendet und empfängt.

7. Verfahren nach Anspruch 1, **dadurch gekennzeichnet, dass** das Dienstfunktionsmodul in dem Signalisierungsserver (SSER) ausgeführt wird und dass das Dienstfunktionsmodul MGCPSignalisierungstelegramme sendet und empfängt.

8. Konfigurationsserver (SER) zur Erzeugung von Dienstfunktionsmodulen für einen Signalisierungsserver (SSER), der Signalisierungsfunktionen zur Steuerung von Kommunikationsbeziehungen über ein Kommunikationsnetz erbringen kann, **dadurch gekennzeichnet,**
- **dass** der Konfigurationsserver (SER) erste Bereitstellungsmittel aufweist, die derart ausgestaltet sind, dass der Konfigurationsserver (SER) Prozedurmodule (PM1, ..., PM7) zum Erfassen, Verarbeiten und Bilden von Signalisierungstelegrammen eines Kommunikationsnetzes bereitstellen kann,
- **dass** der Konfigurationsserver (SER) eine Bedienoberfläche (UI) aufweist, die derart ausgestaltet ist, dass der Konfigurationsserver (SER) die Prozedurmodule(PM1, ..., PM7) in Form von Symbolen darstellen kann,
- **dass** der Konfigurationsserver (SER) Erfassungsmittel aufweist, die derart ausgestaltet sind, dass der Konfigurationsserver (SER) eine durch einen Bediener vorgegebene Auswahl und Anordnung der Symbole der Prozedurmodule (PM1, ..., PM7) auf der Bedienoberfläche(UI) erfassen kann,
- **dass** der Konfigurationsserver (SER) Kombiniermittel aufweist, die derart ausgestaltet sind, dass der Konfigurationsserver (SER) die Prozedurmodule (PM1, ..., PM7) zu einem Dienstfunktionsmodul in einer durch die Auswahl und die Anordnung der jeweiligen Symbole der Prozedurmodule (PM1, ..., PM7) auf der Bedienoberfläche(UI) vorgegebenen Weise zusammenstellen kann und
- **dass** der Konfigurationsserver (SER) zweite Bereitstellungsmittel aufweist, die derart ausgestaltet sind, dass der Konfigurationsserver (SER) das Dienstfunktionsmodul für den Signalisierungsserver (SSER) bereitstellen kann.

9. Signalisierungsserver (SSER) zur Erzeugung von Dienstfunktionsmodulen, mit denen der Signalisierungsserver (SSER) Signalisierungsfunktionen zur Steuerung von Kommunikationsbeziehutigen über ein Kommunikationsnetz erbringen kann, **dadurch gekennzeichnet,**
- **dass** der Signalisierungsserver (SSER) erste Bereitstellungsmittel aufweist, die derart ausgestaltet sind, dass der Signalisierungsserver (SSER) Prozedurmodule (PM1, ..., PM7) zum Erfassen, Verarbeiten und Bilden von Signalisierungstelegrammen eines Kommunikationsnetzes bereitstellen kann,
- **dass** der Signalisierungsserver (SSER) eine Bedienoberfläche (UI) aufweist, die derart ausgestaltet ist, dass der Signalisierungsserver (SSER) die Prozedurmodule (PM1, ..., PM7) in Form von Symbolen darstellen kann,
- **dass** der Signalisierungsserver (SSER) Erfassungsmittel aufweist, die derart ausgestaltet sind, dass der Signalisierungsserver (SSER) eine durch einen Bediener vorgegebene Auswahl und Anordnung der Symbole der Prozedurmodule (PM1, ..., PM7) auf der Bedienoberfläche (UI) erfassen kann,
- **dass** der Signalisierungsserver (SSER) Kombiniermittel aufweist, die derart ausgestaltet sind, dass der Signalisierungsserver (SSER) die Prozedurmodulen (PM1, ..., PM7) zu einem Dienstfunktionsmodul in einer durch die Auswahl und die Anordnung der jeweiligen Symbole der Prozedurmoduje (PM1, ..., PM7) auf der Bedienoberfläche (UI) vorgegebenen Weise zusammenstellen kann und
- **dass** der Signalisierungsserver (SSER) zweite Bereitstellungsmittel aufweist, die derart ausgestaltet sind, dass der Signalisierungsserver (SSER) das Dienstfunktionsmodul zur Ausführung bereitstellen kann.

10. Computerprogramm zur Erzeugung von Dienstfunktionsmodulen, mit denen ein Signalisierungsserver (SSER) Signalisierungsfunktionen zur Steuerung von Kommunikationsbeziehungen über ein Kommunikationsnetz erbringen kann, **dadurch gekennzeichnet, dass** das Computerprogramm Code enthält, mit dem die Schritte des Verfahrens nach Anspruch 1 ausgeführt werden können, wenn das Computerprogramm auf einem Computer ausgeführt wird.

## Claims

1. Method for generating service function modules for a signalling server (SSER) which can provide signalling functions for controlling communications relationships via a communications network, **characterized by** the steps:
- provision of procedure modules (PM1, ..., PM7), by a configuration server (SER), for registering, processing and creating signalling messages of a communications network,
- display of the procedure modules (PM1, ..., PM7), in the form of symbols, by a user interface (UI) on the configuration server (SER),
- registering of a selection and arrangement, predefined by a user, of the symbols of the procedure modules (PM1, ..., PM7) on the user interface (UI),
- combination of the procedure modules (PM1, ..., PM7) by the configuration server (SER) to form a service function module in a manner predefined by the selection and the arrangement of the respective symbols of the procedure modules (PM1, ..., PM7) on the user interface (UI), and
- provision of the service function module, by the configuration server (SER), for the signalling server (SSER).

2. Method according to claim 1, **characterized in that** the service function module is loaded into the signalling server (SSER).

3. Method according to claim 1, **characterized in that** an interface module, for entering parameter data for the service function module, is generated by the configuration server (SER).

4. Method according to claim 3, **characterized in that**, for the purpose of entering parameter data for the service function module, the interface module is loaded into a network management module.

5. Method according to claim 1, **characterized in that** the service function module is realized in the signalling server (SSER), and the service function module sends and receives signalling messages according to the ITU-T Recommendation H.323.

6. Method according to claim 1, **characterized in that** the service function module is realized in the signalling server (SSER), and the service function module sends and receives SIP signalling messages.

7. Method according to claim 1, **characterized in that** the service function module is realized in the signalling server (SSER), and the service function module sends and receives MGCP signalling messages.

8. Configuration server (SER) for generating service function modules for a signalling server (SSER) which can provide signalling functions for controlling communications relationships via a communications network,
**characterized in that**
- the configuration server (SER) has first provision means which are of such design that the configuration server (SER) can provide procedure modules (PM1, ..., PM7) for registering, processing and creating signalling messages of a communications network,
- the configuration server (SER) has a user interface (UI) which is of such design that the configuration server (SER) can display the procedure modules (PM1, ..., PM7) in the form of symbols,
- the configuration server (SER) has registration means which are of such design that the configuration server (SER) can register a selection and arrangement, predefined by a user, of the symbols of the procedure modules (PM1, .., PM7) on the user interface (UT),
- the configuration server (SER) has combining means which are of such design that the configuration server (SER) can combine the procedure modules (PM1, ..., PM7) to form a service function module in a manner predefined by the selection and the arrangement of the respective symbols of the procedure modules (PM1, ..., PM7) on the user interface (UI), and
- the configuration server (SER) has second provision means which are of such design that the configuration server (SER) can provide the service function module for the signalling server (SSER).

9. Signalling server (SSER) for generating service function modules by means of which said modules the signalling server (SSER) can provide signalling functions for controlling communications relationships via a communications network, **characterized in that**
- the signalling server (SSER) has first provision means which are of such design that the signalling server (SSER) can provide procedure modules (PM1, ..., PM7) for registering, processing and creating signalling messages of a communications network,
- the signalling server (SSER) has a user interface (UI) which is of such design that the signalling server (SSER) can display the procedure modules (PM1, ..., PM7) in the form of symbols,
- the signalling server (SSER) has registration means which are of such design that the signalling server (SSER) can register a selection and arrangement, predefined by a user, of the symbols of the procedure modules (PM1, ..., PM7) on the user interface (UI),
- the signalling server (SSER) has combining means which are of such design that the signalling server (SSER) can combine the procedure modules (PM1, ..., PM7) to form a service function module in a manner predefined by the selection and the arrangement of the respective symbols of the procedure modules (PM1, ..., PM7) on the user interface (UI), and
- the signalling server (SSER) has second provision means which are of such design that the signalling server (SER) can provide the service function module for execution.

10. Computer program for generating service function modules, by means of which said modules a signalling server (SSER) can provide signalling functions for controlling communications relationships via a communications network, **characterized in that** the computer program contains code by means of which the steps of the method according to claim 1 can be executed when the computer program is executed on a computer.

## Revendications

1. Procédé pour générer des modules fonctionnels de service pour un serveur de signalisation (SSER) qui peut apporter des fonctions de signalisation pour commander des relations de communication sur un réseau de communication, **caractérisé par** les étapes suivantes:
- Mise à disposition de modules de procédure (PM1, ..., PM7) pour détecter, traiter et former des télégrammes de signalisation d'un réseau de communication par un serveur de configuration (SER),
- Représentation des modules de procédure (PM1, ..., PM7) sous la forme de symboles par une interface utilisateur (UI) sur le serveur de configuration (SER),
- Détection d'une sélection prédéfinie par un utilisateur et disposition des symboles des modules de procédure (PM1, ..., PM7) sur l'interface utilisateur (UI),
- Regroupement des modules de procédure (PM1, ..., PM7) en un module fonctionnel de service d'une manière prédéfinie par la sélection et la disposition des symboles respectifs des modules de procédure (PM1, ..., PM7) sur l'interface utilisateur (UI) par le serveur de configuration (SER) et
- Mise à disposition du module fonctionnel de service par le serveur de configuration (SER) pour le serveur de signalisation (SSER).

2. Procédé selon la revendication 1, **caractérisé en ce que** le module fonctionnel de service est chargé dans le serveur de signalisation (SSER).

3. Procédé selon la revendication 1, **caractérisé en ce qu'**un module d'interface destiné à la saisie des données de paramètre pour le module fonctionnel de service est généré par le serveur de configuration (SER).

4. Procédé selon la revendication 3, **caractérisé en ce que** le module fonctionnel de service est chargé dans un serveur de gestion de réseau pour la saisie des données de paramètre pour le module fonctionnel de service.

5. Procédé selon la revendication 1, **caractérisé en ce que** le module fonctionnel de service est exécuté dans le serveur de signalisation (SSER) et que le module fonctionnel de service envoie et reçoit des télégrammes de signalisation conformes à la recommandation UIT-T H.323.

6. Procédé selon la revendication 1, **caractérisé en ce que** le module fonctionnel de service est exécuté dans le serveur de signalisation (SSER) et que le module fonctionnel de service envoie et reçoit des télégrammes de signalisation SIP.

7. Procédé selon la revendication 1, **caractérisé en ce que** le module fonctionnel de service est exécuté dans le serveur de signalisation (SSER) et que le module fonctionnel de service envoie et reçoit des télégrammes de signalisation MGCP.

8. Serveur de configuration (SER) pour générer des modules fonctionnels de service pour un serveur de signalisation (SSER) qui peut apporter des fonctions de signalisation pour commander des relations de communication sur un réseau de communication, **caractérisé en ce**
- **que** le serveur de configuration (SER) présente des premiers moyens de mise à disposition qui sont configurés de telle sorte que le serveur de configuration (SER) peut mettre à disposition des modules de procédure (PM1, ..., PM7) pour détecter, traiter et former des télégrammes de signalisation d'un réseau de communication,
- **que** le serveur de configuration (SER) présente une interface utilisateur (UI) qui est configurée de telle sorte que le serveur de configuration (SER) peut représenter les modules de procédure (PM1, ..., PM7) sous la forme de symboles,
- **que** le serveur de configuration (SER) présente des moyens de détection qui sont configurés de telle sorte que le serveur de configuration (SER) peut détecter une sélection prédéfinie par un utilisateur et une disposition des symboles des modules de procédure (PM1, ..., PM7) sur l'interface utilisateur (UI),
- **que** le serveur de configuration (SER) présente des moyens de combinaison qui sont configurés de telle sorte que le serveur de configuration (SER) peut regrouper les modules de procédure (PM1, ..., PM7) en un module fonctionnel de service d'une manière prédéfinie par la sélection et la disposition des symboles respectifs des modules de procédure (PM1, ..., PM7) sur l'interface utilisateur (UI) et
- **que** le serveur de configuration (SER) présente des deuxièmes moyens de mise à disposition qui sont configurés de telle sorte que le serveur de configuration (SER) peut mettre à disposition le module fonctionnel pour le serveur de signalisation (SSER).

9. Serveur de signalisation (SSER) pour générer des modules fonctionnels de service avec lesquels le serveur de signalisation (SSER) peut apporter des fonctions de signalisation pour commander des relations de communication sur un réseau de communication, **caractérisé en ce**
- **que** le serveur de signalisation (SSER) présente des premiers moyens de mise à disposition qui sont configurés de telle sorte que le serveur de signalisation (SSER) peut mettre à disposition des modules de procédure (PM1, ..., PM7) pour détecter, traiter et former des télégrammes de signalisation d'un réseau de communication,
- **que** le serveur de signalisation (SSER) présente une interface utilisateur (UI) qui est configurée de telle sorte que le serveur de signalisation (SSER) peut représenter les modules de procédure (PM1, ..., PM7) sous la forme de symboles,
- **que** le serveur de signalisation (SSER) présente des moyens de détection qui sont configurés de telle sorte que le serveur de signalisation (SSER) peut détecter une sélection prédéfinie par un utilisateur et une disposition des symboles des modules de procédure (PM1, ..., PM7) sur l'interface utilisateur (UI),
- **que** le serveur de signalisation (SSER) présente des moyens de combinaison qui sont configurés de telle sorte que le serveur de signalisation (SSER) peut regrouper les modules de procédure (PM1, ..., PM7) en un module fonctionnel de service d'une manière prédéfinie par la sélection et la disposition des symboles respectifs des modules de procédure (PM1, ..., PM7) sur l'interface utilisateur (UI) et
- **que** le serveur de signalisation (SSER) présente des deuxièmes moyens de mise disposition qui sont configurés de telle sorte que le serveur de signalisation (SSER) peut mettre à disposition le module fonctionnel en vue de son exécution.

10. Programme informatique pour générer des modules fonctionnels de service avec lesquels le serveur de signalisation (SSER) peut apporter des fonctions de signalisation pour commander des relations de communication sur un réseau de communication, **caractérisé en ce que** le programme informatique contient un code avec lequel peuvent être exécutées les étapes du procédé selon la revendication 1 lorsque le programme informatique est exécuté sur un ordinateur.
